# EUROPÄISCHE PATENTSCHRIFT

(11) **EP 0 916 270 B1**
(45) Veröffentlichungstag und Bekanntmachung des Hinweises auf die Patenterteilung: **04.06.2003**
(21) Anmeldenummer: 98811136.5
(22) Anmeldetag: 13.11.1998
(51) Int. Cl.: A23L 1/304, A61K 47/02, A61K 47/26, A61K 33/14, A61K 31/19, A23L 1/09

(54) **Mineralstoffgemisch mit verbessertem Geschmack**
Mineral-mixture with improved taste
Mélange de minéraux dont le goût est amélioré

(30) Priorität: 18.11.1997 CH 265797
(43) Veröffentlichungstag der Anmeldung: 19.05.1999
(73) Patentinhaber: EnergyBalance AG, 9491 Ruggell (LI)
(72) Erfinder:

(56) Entgegenhaltungen:
- EP-A- 0 041 620
- EP-A- 0 297 681
- EP-A- 0 778 027
- WO-A-86/03121
- WO-A-98/08524
- US-A- 5 095 035
- DATABASE WPI Section Ch, Week 198546 Derwent Publications Ltd., London, GB; Class B05, AN 1985-287115 XP002119085 -& JP 60 197624 A (NIPPON CHEMIPHAR CO), 7. Oktober 1985 (1985-10-07)

## Beschreibung

Die bekannten Formen von Mineralstoffmischungen nennen sich:
Mineraldrink
Mineral-Nährsalz
Lebenswichtige Mineralien und Spurenelemente
Basenmischung
Basendrink
Basische Nährsalzmischung
Nahrungsergänzung auf Basis von Mineralstoffen und Spurenelementen Diätergänzung aus alkalischen Mineralien
Die oben genannten Mineralstoffmischungen sind sog. Nahrungsergänzungen. Zudem gibt es Mineralstoffmischungen, die als Arzneimittel registriert sind und für folgende Anwendungen zugelassen sind: Übersäuerung, Übersäuerung des
Magens, Azidose des Magens, - des Duodenums, - des Dünndarmes, Übersäuerung des Körpers, - der Körperzellen und Azidose.

All diese Mineralmischungen existieren in Pulverform oder Granulat zur direkten Einnahme, zum Streuen in und auf andere Lebensmittel, zur Einnahme nach Verdünnung mit Flüssigkeit, als Brausetablette zur Verdünnung und Einnahme mit Flüssigkeit, oder in Tablettenform zur direkten oralen Einnahme.

Die zur Zeit auf dem Markt bekannten Produkte haben in der Zusammensetzung neben den Wirkstoffen manchmal auch: Laktose, Molke, Milchzucker, künstliche Süssstoffe, Maltodextrin, Saccharose, Fruchtpulver und Aromen. Diese Zutaten sollen den Geschmack verbessern, oder haben herstellungstechnische Funktionen. Laktose, Milchzucker und Molke geben den Produkten einen buttermilchähnlichen Geschmack. Der Geschmack von warmer Buttermilch wird nur von einer Minderheit als angenehm empfunden. Viele Menschen leiden an einer latenten Milchallergie. Deshalb ist der Einsatz von Milchderivaten für therapeutische Zwecke fragwürdig. Künstliche Süssstoffe werden von den Wissenschaftlern widersprüchlich gewertet und deren Einsatz ist somit unsicher. Saccharose, auch Weisszucker genannt, kann für therapeutische Zwecke nicht empfohlen werden. Die auf dem Markt bekannten Produkte schmecken aufgrund ihrer Zusammensetzung meist schlecht. Dadurch reduziert sich der therapeutische Effekt, weil der schlechte Geschmack die Akzeptanz beim Kunden vermindert. Eine bessere therapeutische Wirkung wird durch erhöhte Akzeptanz aufgrund eines verbesserten Geschmackes erreicht.

Die Aufgabe der vorliegenden Anmeldung besteht deshalb in der Formulierung einer Mineralstoffmischung für orale Einnahme die einen verbesserten Geschmack aufweist. Der Gegenstand der Ansprüche 1-4 bringt eine Lösung zu dieser Aufgabe. Vergleichstests haben gezeigt, dass eine Mineralstoffmischung Kieselerde und Kaliumcitrat, geschmacklich bevorzugt werden.

## Patentansprüche

1. Arzneimittel, Nahrungs- und Mineralstoffergänzungen deren Zusammensetzung mehrheitlich aus Mineralstoffen und Spurenelementen besteht und die für die orale Einnahme bestimmt und in Pulver-, Granulat-, Flüssig- und Tablettenform erhältlich sind **dadurch gekennzeichnet, dass** sie Kieselerde und Kalium enthalten.

2. Arzneimittel, Nahrungs- und Mineralstoffergänzungen nach Anspruch 1 **dadurch gekennzeichnet, dass** sie Natriumcarbonat oder ähnliche Natriumverbindungen enthalten.

3. Verwendung von Arzneimitteln, Nahrungs- und Mineralstoffergänzungen nach Anspruch 1 oder 2 zur Herstellung eines Produktes zur Behandlung von:
Übersäuerung, Azidose, Regulierung und Ausgleich des Säuren-Basen-Haushaltes/Gleichgewichtes; Übersäuerung/Azidose des Magens, - des Duodenums, - des Dünndarms, - des Körpers, - der Körperzellen;
Säurereduzierung, Säurebindung, Alkalisierung, Basifizierung, Zellstoffwechsel, Zellatmung, Zellstoffverwertung, Sauerstoffatmung der Zellen,
Schlackenabbau, Entgiftung, Stoffwechselprobleme, Leistungsschwäche, Säureüberschuss, Sodbrennen, Magendruck, Neutralisierung der Magensäure, Störungen des Nagel- und Haarwachstums, Stress, einseitige Ernährung, Übersäuerung des Gewebes, Unterstützung der Organfunktionen,
Verstopfung, Konstipation, Darmträgheit, Stuhlverhaltung und Flatulenz

4. Arzneimittel, Nahrungs- und Mineralstoffergänzungen nach Anspruch 1 **dadurch gekennzeichnet, dass** das Kalium ein Citrat ist.

## Claims

1. Medicine, nutritional and mineral-mixture supplements with a composition mainly consisting of minerals and trace elements to be taken orally, available in powder, granulated, fluid and tablet form distinguished by the fact that they contain silica and potassium.

2. Medicine, nutritional and mineral-mixture supplements as claim 1 distinguished by the fact that they contain sodium carbonate or similar compounds of sodium.

3. Use of medicine, nutritional and mineral-mixture supplements as claim 1 or 2 for the manufacture of a product for the treatment of excessive acidity, acidosis, regulation and balance of the acid/base level/equilibrium; excessive acidity/acidosis of the stomach, duodenum, small intestine, body, cells; reduction of acid, acid bonding, alkalisation, basification, cellular metabolism, cellular respiration, cell matter utilisation, cellular oxidation, breakdown of waste products, detoxification, metabolic disorders, listlessness, excessive acidity, heartburn, stomach ache, neutralisation of gastric acids, disorders of nail and hair growth, stress, imbalanced nutrition, excessive acidity in the tissue, promotion of organ function, constipation, underactivity of the intestines, retention of faeces and flatulence.

4. Medicine, nutritional and mineral-mixture supplements as claim 1 distinguished by the fact that the potassium is a citrate.

## Revendications

1. Les produits pharmaceutiques, compléments alimentaires et minéraux dont la composition est essentiellement à base de minéraux et d'oligo-éléments et qui sont destinés à la prise par voie orale et disponibles sous forme de poudre, granulés, liquide et comprimés sont **caractérisés par** leur teneur en silice et en potassium.

2. Les produits pharmaceutiques, compléments alimentaires et minéraux selon la revendication 1 sont **caractérisés par** leur teneur en carbonate de sodium ou produits sodiques analogues.

3. L'emploi de produits pharmaceutiques, compléments alimentaires et minéraux selon la revendication 1 ou 2 pour la fabrication d'un produit pour le traitement de : l'hyperacidité, l'acidose, la régularisation et l'équilibre de l'équilibre acido-basique ; acidification/acidose de l'estomac, du duodénum, du corps, des cellules somatiques ; réduction acidique, liaison acidique, alcalisation, basification, métabolisme cellulaire, respiration cellulaire, utilisation de la cellulose, respiration oxygénique des cellules, détoxination, désintoxication, problèmes métaboliques, baisse de rendement, hyperacidité, renvois acides, lourdeur d'estomac, neutralisation de l'acide gastrique, troubles de la croissance des ongles et des cheveux, stress, alimentation mal équilibrée, acidification des tissus, soutien des fonctions organiques, congestion, constipation, paresse intestinale, rétention des selles et flatulences.

4. Produits pharmaceutiques, compléments alimentaires et minéraux selon la revendication 1, **caractérisés par le fait que** le potassium est un citrate.
